# EUROPÄISCHE PATENTANMELDUNG

(11) **EP 3 444 178 A1**
(43) Veröffentlichungstag der Anmeldung: **20.02.2019**
(21) Anmeldenummer: 18000604.1
(22) Anmeldetag: 17.07.2018
(51) Int. Cl.: B63B 1/40, B63B 39/06

(54) **SYSTEM ZUR VERÄNDERUNG DER EIGENWELLE EINES BOOTES**

(30) Priorität: 17.08.2017 DE 102017007809
(71) Anmelder: Merkel, Thimo Casjen, 25761 Büsum (DE); Merkel, Broder Joachim, 09599 Freiberg (DE)
(72) Erfinder: Merkel, Thimo Casjen, 09599 Freiberg (DE); Merkel, Broder Joachim, 09599 Freiberg (DE)

(57) **Zusammenfassung**

1. Die Erfindung betrifft ein System zur Veränderung des Wellensystems (Eigenwelle) eines Bootes in Verdränger-Fahrt, wobei das System aus seitlich am Rumpf befindlichen Hydrofoils besteht, die durch destruktive Interferenz mit dem Wellensystem des Bootes dieses Wellensystem minimieren, um so Antriebsenergie zu sparen. Die Hydrofoils müssen dabei nahezu spiegelverkehrt dem "auslaufenden" Wellensystem entgegengesetzte Wellen erzeugen und daher auch entsprechend der Rumpfform (sowie des Eigendesigns) aufgebaut sein.
2. Das Hydrofoilsystem kann zudem ausklappbar, oder anderweitig beweglich sein, damit dieses im Hafen (z.B. beim Liegen an einem Pier oder Kai) keine Probleme bereitet.
3. Das Hydrofoilsystem kann in allen drei Achsen beweglich ausgeführt sein, um die Welleninterferenz während der Fahrt optimieren zu können.

## Beschreibung

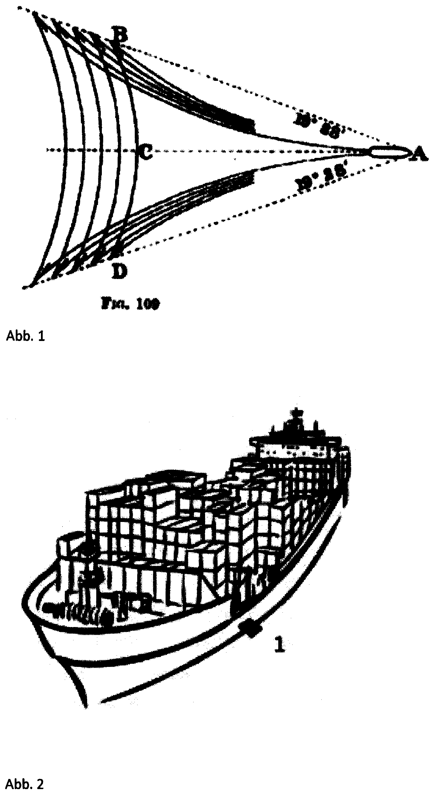

Ein erheblicher Teil der Energie, die für die Fortbewegung eines Verdränger-Bootes benötigt wird, wird in Wellenenergie umgesetzt. Abbildung. 1 zeigt eine schematische Darstellung eines durch ein Schiff erzeugten Wellensystems am Beispiel einer Kelvinwelle (nach www.wikipedia.org). Bei einem Schiffskörper nach EP 1044873 A1 kann die Wellenbildung verringert werden durch über dem Wasser befindliche, besonders geformte Flächen um das Boot herum. Insbesondere große Schiffe (Containerschiffe, Massengutfrachter, Kreuzfahrtschiffe, etc.) können hierdurch nicht profitieren, weil sie dadurch extrem groß werden würden. Die Patentschrift DE 688 544 von 1940 schlägt ein System vor, bei dem die Wellen zum Teil durch einen sog. Wellenschlucker aufgenommen werden sollen. Dabei handelt es sich um eine am Bug befindliche zweite Bordwand, wobei im Zwischenraum zwischen der eigentlichen Bordwand und der zusätzlichen die entstehende Bugwelle zum Teil aufgefangen werden soll.

Alternative Möglichkeiten zur Energieeinsparung bieten Tragflächenboote. Die Forschung an Tragflächenbooten, d.h. die Nutzung von Flügeln, um ein Boot aus dem Wasser zu heben und auf diese Weise den Wellenwiderstand zu verringern, sind wie z.B. die Offenlegungsschrift DE 1 506 260 von 1969 zeigt, relativ alt. Insbesondere für Schiffe die große Lasten transportieren müssen eignen sich Tragflächenboote selten/nicht.

Kombinationen aus Verdränger und Tragflächenbooten sind oftmals kurios, wie das Patent US 4 080 922 A zeigt. Es beschreibt ein System, bei dem ein schwenkbarer Hydrofoil eingesetzt werden soll, um durch das Herausheben des Fahrzeugs die Wellenbildung zu vermindern.

Eine Möglichkeit mittels eines Hydrofoils Einfluss auf die Wellenbildung zu nehmen zeigt das Patent KR 20130128112 A. Es behandelt einen Foil im Heckbereich eines Schiffes wird dabei aber vor allem Einfluss auf die in den Propeller gehenden Wasserströme nehmen.

Die Aktualität von Hydrofoils zur Minimierung von Wellenenergieverbrauchen wird durch die Firma Hull Vane aufgezeigt. Deren Patent WO2018038611 A1 nutzt einen Hydrofoil, um die Heckwelle eines Bootes zu reduzieren und dadurch erhebliche Energiemengen einzusparen.

Ein System das aus Ozeanwellen Energie für den Antrieb eines Schiffes gewinnt wurde bei dem Schiff Suntory Mermaid II umgesetzt und erfolgreich im Indischen Ozean getestet. Hieraus ist insbesondere ersichtlich, dass über einen Flügel, bzw. Hydrofoil Energie aus einer Meereswelle gezogen werden kann. Da Meereswellen jedoch relativ zum einem Schiff nicht stehend sind, sondern beweglich sind, ist die Energieausbeute verhältnismäßig gering und die Konstruktion des Hydrofoils muss zudem beweglich gestaltet sein, um eine Energieausbeute erhalten zu können.

Das deutsche Patent DE 931 090 B von 1955, sowie das US Patent US20150344106 A1 versuchen durch einen vertikal angeordneten Hydrofoil die Bugwelle zu minimieren, um Antriebsenergie zu sparen. Dabei beziehen sich jedoch beide Patente eindeutig auf den Bereich mittschiffigen Bugbereich. Die Wellenfront, die durch den schräg in den Parallelbereich überlaufenden Bugflanken entsteht, kann durch die in diesen Patenten beschriebenen Methoden nicht im Sinne einer Energieeinsparung erreicht werden.

Das hier vorgeschlagene System beschäftigt sich dagegen mit einem deutlich anderen Problem: Ziel ist es nicht eine Welle am (zentralen/mittschiffigen) Bugbereich nicht entstehen zu lassen, sondern aus der stehenden Welle die sich am gesamten Bugbereich gebildet hat, die maximale Energie wieder zurückzugewinnen, indem die Welle im "auslaufenden" Bereich, d.h. im Grenzbereich zwischen Bugbereich und Seitenbereich ("angehender Parallelbereich") ausgelöscht wird. Der Grund dafür, dass aus der Gesamtwelle Energie zurückgewonnen werden kann liegt darin begründet, dass i) die Welle sich zu diesem Zeitpunkt noch nicht vom Bugbereich, bzw. Schiffskörper gelöst hat, ii) dass es sich um eine relativ zum Schiffskörper stehende Welle handelt, und damit ein System wie das beschriebene erdacht werden kann, dass einen maximalen Rückgewinnungseffekt aufweist und iii) das System sowohl in horizontaler, wie auch vertikaler, wie auch kombinierter Anordnung konstruiert werden kann, um je nach Schiffskörperform die optimale Wirkung in Bezug auf die Treibstoffeinsparung zu erzielen. Dabei ist bei der Konstruktion nicht nur auf die Wellenminimierung zu achten, sondern auch auf das Kräfteparallelogramm das durch einen Flügel entsteht und einen Beitrag in Fahrtrichtung aufweisen kann, der ebenfalls für die Treibstoffeinsparung genutzt werden kann. Das System in seiner Breitenminimierung allein durch die Fahrtgeschwindigkeit bedingt und spart aufgrund der geringen Breite in folgenden Bereichen Nachteile ein, die ein System haben würde, welches nicht auf Rückgewinnung, sondern auf vorherige Behebung des Wellenproblems eingehen würde: i) Anhebungseffekte im Bugbereich, ii) Reibungswiderstand durch die Hydrofoilgröße, iii) Ermüdungseffekte durch Ozeanwellen (insbesondere beim Aufschlagen des Bugs in eine großes Wellental).

Um z.B. im Bugbereich die gesamte Eigenwelle im Sinne der Energieeinsparung zu erreichen muss eine Vorrichtung seitlich am Schiff, d.h. im oder nahe am Grenzbereich zwischen Bugbereich und Paralellbereich des Rumpfes (bezogen auf die Wasserlinie), angebracht sein, die je min. einen Hydrofoil in das Wasser einbringt, der eine Welle erzeugt, die dann mit der durch den gesamten Bugbereich des Schiffes erzeugten Eigenwellen interferiert, so dass die Eigenwellen des Verdrängungskörpers bei Fahrt durchs Wasser nahezu gelöscht werden. Abbildung. 2 zeigt die Position eines solchen Hydrofoils zur Minimierung der (Gesamt-)Bugwelle.

In der Zeichnung Abbildung 2 bezeichnet 1 einen Hydrofoil, der an den Seite eines Schiffes positioniert ist. Die Geometrie eines solchen (hier für die Bugwelle konzipierten Hydrofoils) ist nicht Gegenstand dieser Darstellung. Dieser kann durch unter oder über dem Wasser an den Schiffskörper, vornehmlich Rumpf, angebrachten Halterungen, oder direkt in das Wasser eingeführt werden, muss also nicht wie dargestellt vom Schiffskörper aus in seiner Gesamtheit ausgehen, sondern kann von diesem räumlich abgetrennt sein. Mechanismen zur beweglichen Positionierung des Systems sind ebenfalls nicht eingezeichnet. Je nach strömungsmechanischen Gesichtspunkten kann die Positionierung des Hydrofoils an der gesamten Bordwand variieren. Selbstverständlich sind auch mehrere Hydrofoils pro Schiffsseite denkbar. Diese können in horizonteler Form, in vertikeler Form, oder in einer kombinierten Form vorliegen.

Demnach betrifft die Erfindung einen oder mehrere beidseitig an den Schiffskörper positionierte Hydrofoils, die dazu dienen das vom Schiff erzeugte Wellensystem (an Bug und/oder Seite und/oder Heck) durch destruktive Interferenz zu minimieren (ggf. zusätzlich zu einem Wulstbug oder einem Hull Vane). Eine sinnvolle Erfindung dieser Art ist in CH614669 A5 dargelegt, bei der durch Tragflächen am Bug (mittschiffs) und an den Seiten die Wellen eines Schiffes (mit schlechter Froudezahl) minimiert werden. Das hier vorgeschlagene System unterscheidet sich in einigen wichtigen Punkten von diesem System:
1. Der am Bug befindliche Flügel soll nicht am Wulstbug angebracht sein und auch nicht vor der Gesamtwelle, sondern im auslaufenden Bereich der Welle, also nahe dem Bereich, wo die sich addierende Bugwelle über den gesamten Bugbereich aufgebaut hat und wo demnach am meisten Wellenenergie aufgestaut ist. Es liegt die einfache Erkenntnis zugrunde, die sich offensichtlich nicht im Schifffahrtsbereich durchgesetzt hat, dass auch aus der bereits entstandenen stehenden Welle noch möglichst viel Energie wieder entnehmen lässt.
2. Das System ist einziehbar oder einklappbar, d.h. beweglich. Dies ist eine extrem wichtige Eigenschaft, um ein Schiff z.B. im Hafen sicher und einfach an den Pier anliegen zu können. Ein solches System ist nur automatisiert sinnvoll nutzbar und als solches zum 17.08.2017 noch nicht in der Literatur erwähnt worden.

Durch die erfindungsgemäße Gestaltung der Hydrofoils gelingt es, die Wellenbildung und damit die darauf zurückzuführenden Unzukömmlichkeiten zu vermindern bzw. zu beseitigen. Insbesondere gelingt eine beträchtliche Einsparung an Antriebsenergie für das gesamte Schiff. Die Gestaltung des Hydrofoils sollte dabei berücksichtigen, dass an der vom Bug-Mittschiffsbereich entfernteren Stelle liegende Hydrofoil die hier vorliegende Eigenwelle durch Interferenz auslöschen muss. Der Wellenkamm und die Schiffsfahrtrichtung stehen hier nicht senkrecht aufeinander. Bei einem horizontelen Hydrofoil sollte daher die Außenform ("laterale und horizontale Richtung") des Hydrofoils dem Wellenkamm folgen, während die Flügelstruktur, also die Höhenänderung ("vertikale Richtung") entsprechend der Schifffahrtsrichtung angelegt sein sollte. Ferner sollte an den beiden Enden des Flügels dafür gesorgt werden, dass ein gleichmäßiges Auslöschen der Welle gewährleistet ist und demnach Überhangsbereiche entweder durch die Außenform vermieden, oder durch die Höhenform "ausgebügelt" werden. Beispielsweise ließe sich ein Überhang vermeiden, indem die Außenform Parallellogrammartig gestaltet ist. Bei einem Vertikal gestalteten Flügel, ist insbesondere darauf zu achten, dass möglichst kein Strömungsabriss stattfindet. Im Sinne eines Venturikanals wäre also ein abgerundeter, "langer Venturikanal" ("Fachbegriff, der sich nicht auf die tatsächliche Länge des Hdrofoils bezieht) der sich aus Bordwand und entsprechend gestaltetem Flügel zusammensetzt geeignet.

Erfindungsgemäß müssen nur nahe am Entstehungsort der Wellen ggf. noch im Grenzschichtbereich der laminaren Strömung, Hydrofoils angebracht werden (z.B. starr, klappbar, einziehbar oder einschwenkbar) die eine Welle erzeugen, die mit der gegebenen Bugwelle (bzw. Heckwelle - gemeint ist die laterale Heckwelle - oder seitliche vertikale Welle) destruktiv interferiert. Alternativ können z.B. im Bug oder Heckbereich des Schiffes Hydrofoils fest oder beweglich installiert werden, die nicht über die Breite des Rumpfes hinausragen und dennoch mit der Eigenwelle möglichst maximal destruktiv interferieren.

Dier Erfindung wird bei nicht verstellbarem Hydrofoils nur in einem gewissen Geschwindigkeitsbereich (z.B. Reisegeschwindigkeit) gut nutzbar sein. Viele Nutzfahrzeuge (Containerschiffe, Massenfrachter, Kreuzfahrtschiffe, etc.) bewegen sich aber meist mit konstanter Reisegeschwindigkeit.

Die erfindungsgemäße Gestaltung der Hydrofoils hat naturgemäß eine größere Oberfläche und dementsprechend einen höheren Reibungswiderstand. Trotzdem ist der Gesamtwiderstand (Reibungswiderstand + Wellenwiderstand) geringer, wodurch eine Einsparung an Antriebsenergie erzielt werden kann.

Zum Verringern des Reibungswiderstandes können zusätzlich designtechnische Maßnahmen ergriffen werden die die Erzeugung von turbulenter Strömung am Rumpf des Schiffes verhindern. Insbesondere bei hohem äußeren Wellengang kann es sinnvoll sein das System zu de-aktivieren (z.B. durch einseitiges Herausfahren aus dem Wasser), damit turbulenter Strömung entgegengewirkt werden kann, bzw. das System selbst keinen Schaden nimmt.

In besonderer Gestaltung des erfindungsgemäßen Hydrofoils, kann dieser zum Ausgleich von größeren Wellen beweglich, d.h. verstellbar, bzw. nachregelbar gebaut sein. Zudem kann ein Regelsystem für die Hydrofoils auch dazu benutzt werden, um für unterschiedliche Geschwindigkeiten, oder gar für kontinuierliche Geschwindigkeitsveränderungen immer einen optimalen Antriebsenergieverbrauch zu erzielen.

## Patentansprüche

1. Ein oder mehrere an oder neben den Seiten eines Schiffskörpers positionierten Hydrofoil, der zur Erzeugung von Wellen genutzt wird, die durch destruktive Interferenz, das Eigenwellensystem eines Schiffes an Bug und/oder Seite und/oder Heck eliminiert und dadurch den Antriebsenergieverbrauch reduziert.

2. Ein System nach Anspruch 1 bei dem das Hydrofoilsystem derart positioniert ist, dass es in einem Hafen oder einem Kanal nicht über die Maximialbreite des Schiffsrumpfes hinausragt.

3. Ein System nach Anspruch 1, das in einem Hafen, einer Schleuse oder bei großem Wellengang keine Nachteile erzeugt und demzufolge einziehbar, ausklappbar, schwenkbar, aufholbar, oder auf andere Weise beweglich (z.B. unter den Kiel führbar oder abnehmbar, etc.) ist.

4. Ein System nach Anspruch 1 und/oder 2, das verstellbar ist, um bei unterschiedlichen Geschwindigkeiten jeweils eine optimale Welleninterferenz zu erzeugen und so den Antriebsenergieverbrauch zu senken.
